# EUROPÄISCHE PATENTANMELDUNG

(11) **EP 2 020 314 A1**
(43) Veröffentlichungstag der Anmeldung: **04.02.2009**
(21) Anmeldenummer: 08010007.6
(22) Anmeldetag: 31.05.2008
(51) Int. Cl.: B60G 21/05, B60B 35/00

(54) **Angetriebene Kraftfahrzeug-Hinterachse des Verbundlenkerachstyps**

(30) Priorität: 01.08.2007 DE 102007036080
(71) Anmelder: GM Global Technology Operations, Inc., Detroit MI 48265-3 (US)
(72) Erfinder: Bitz, Gerd, 55126 Mainz (DE); Ehrlich, Dirk, 55294 Bodenheim (DE)
(74) Vertreter: Strauss, Peter

(57) **Zusammenfassung**

Eine mit dem Kraftfahrzeug-Antriebsstrang koppelbare angetriebene Kraftfahrzeug-Hinterachse 10 ist als Verbundlenkerachse mit zwei radtragenden, elastisch am Fahrzeugaufbau angelenkten starren Längslenkern (12) und einer biegesteifen, jedoch torsionsweichen Querstrebe (14) ausgeführt. Dabei schwingen die Längslenker (12) jeweils um wenigstens eine Schwenkachse (16). Die Querstrebe (14) besteht über ihre gesamte Länge aus einem einstückigen Rohrprofil oder aus einem offenen Profil. Dabei ist sie insbesondere von den Schwenkachsen (16) beabstandet sowie in Längsrichtung des Kraftfahrzeuges betrachtet vor den Radmitten angeordnet. Im Bereich ihrer beiden Enden ist die Querstrebe (14) mit den Längslenkern verschweißt. Die Querstrebe (14) ist insbesondere allgemein nach oben gekröpft, um dadurch Platz für den Einbau wenigstens eines dem Antriebsstrang zugeordneten Moduls beispielsweise für den Einbau einer Kardanwelle und eines Hinterachs-Differentials, zu schaffen.

## Beschreibung

Die Erfindung betrifft eine angetriebene Kraftfahrzeug-Hinterachse, die mit dem Kraftfahrzeug-Antriebsstrang koppelbar ist. Sie betrifft ferner ein Kraftfahrzeug mit einer solchen angetriebenen Kraftfahrzeug-Hinterachse.

Die bisher bekannten angetriebenen Kraftfahrzeug-Hinterachsen bestehen aus einer Vielzahl von Blechen, was mit einem relativ großen Montage- und Schweißaufwand verbunden ist. Zudem ist die Dauerhaltbarkeit bei geschweißten Blechen kritisch. Es wurden bereits Achsen mit gekröpftem Torsionsprofil vorgeschlagen, wobei das gekröpfte Torsionsprofil nicht nur bei allradgetriebenen Fahrzeugen, sondern auch bei Fahrzeugen ohne Allradantrieb eingesetzt wurde. Auch diese Achsen bestehen jedoch wieder aus einer Vielzahl von Blechen, was die zuvor genannten Nachteile mit sich bringt.

Der Erfindung liegt die Aufgabe zugrunde, eine verbesserte angetriebene Kraftfahrzeug-Hinterachse sowie ein verbessertes Kraftfahrzeug der eingangs genannten Art zu schaffen, die eine besonders kostengünstige Hinterachsen-Konstruktion ermöglichen.

Bezüglich der angetriebenen Kraftfahrzeug-Hinterachse wird diese Aufgabe erfindungsgemäß durch die Merkmale des Anspruchs 1 gelöst. Es wird also eine mit dem Kraftfahrzeug-Antriebsstrang koppelbare angetriebene Kraftfahrzeug-Hinterachse angegeben, die als Verbundlenkerachse mit zwei radtragenden, elastisch am Fahrzeugaufbau angelenkten starren Längslenkern und einer biegesteifen, jedoch torsionsweichen Querstrebe ausgeführt ist. Dabei schwingen die Längslenker jeweils um wenigstens eine Schwenkachse. Die Querstrebe besteht über ihre gesamte Länge z.B. aus einem einstückigen Rohrprofil oder aus einem offenen Profil, wobei sie insbesondere von den Schwenkachsen beabstandet sowie in Längsrichtung des Kraftfahrzeugs betrachtet vor den Radmitten angeordnet ist. Zudem ist die Querstrebe im Bereich ihrer beiden Enden mit den Längslenkern verschweißt. Um Platz für den Einbau wenigstens eines dem Antriebsstrang zugeordneten Moduls zu schaffen, ist die Querstrebe insbesondere allgemein nach oben gekröpft.

Aufgrund dieser Lösung ergibt sich eine besonders kostengünstige angetriebene Kraftfahrzeug-Hinterachse, wobei mit der allgemein nach oben gekröpfte Querstrebe Platz für den Einbau eines dem Antriebsstrang zugeordneten Moduls geschaffen wird. Dabei kann die Querstrebe insbesondere so gekröpft sein, um dadurch Platz für den Einbau einer Kardanwelle und eines Hinterachs-Differentials zu schaffen.

Bei der erfindungsgemäßen angetriebenen Kraftfahrzeug-Hinterachse handelt es sich also um eine Verbundlenkerachse, bei der der mit den Längslenkern verschweißte Querträger im Gegensatz zu herkömmlichen Starrachsen vor der Radmitte sitzt und alle Hoch- und Seitenkraftmomente aufnimmt muss und somit gleichzeitig als Stabilisator wirkt.

Bevorzugt ist die Querstrebe zumindest in ihrem in Strebenlängsrichtung betrachtet mittleren Bereich um einen vorgegebenen Betrag nach oben gekröpft.

Gemäß einer bevorzugten praktischen Ausführungsform der erfindungsgemäßen angetriebenen Kraftfahrzeug-Hinterachse weist die Querstrebe an ihren beiden Enden jeweils einen relativ torsionssteifen Querschnitt und im mittleren Bereich einen relativ torsionsweichen U-, V-, L-, X- oder ähnlichen Querschnitt mit zumindest einem doppel- oder einwandigen Profilschenkel auf.

Dabei ist der Übergangsbereich vom torsionssteifen zum torsionsweichen Querschnitt vorteilhafterweise fließend gestaltet.

Von Vorteil ist insbesondere auch, wenn der Querschnitt der Verbindungsstelle zwischen einem jeweiligen Längslenker und der Querstrebe eine rotationssymmetrische Form besitzt, die ein axiales Verdrehen der Querstrebe vor dem Schweißen der Verbindung gestattet.

Durch diese rotationssymmetrische Form kann die Querstrebe vor dem Verschweißen mit den Längslenkern beliebig verdreht werden, und zwar unabhängig von der Querschnittsform der Querstrebe im Torsionsbereich. Die Lage des Schubmittelpunktes im Torsionsbereich kann somit beliebig auch während der Serienproduktion verändert werden.

Bei reduziertem Fertigungsaufwand können verschiedene Anforderungen bezüglich der damit erzielbaren Fahreigenschaften, insbesondere der Sturz- und Vorspuränderung beim wechselseitigen Einfedern und/oder des Eigenlenkverhaltens der Hinterachse bei Kurvenfahrten erfüllt sowie eine höhere Haltbarkeit und Tragfähigkeit gewährleistet werden.

Gemäß einer bevorzugten Ausführungsform sind die Längslenker als biege- und torsionssteife Gussteile ausgeführt. Dies ermöglicht es, alle notwendigen Teile wie Radträgerplatte, Federsitz, Auge zur Befestigung des Stoßdämpfers und eventuell Befestigung eines Stabilisators, Fassung für die liegend oder stehend angeordnete Dämpfungsbuchse und andere Chassisteile im Längslenker zu integrieren.

Zur Erhöhung der Festigkeit und/oder zur Reduzierung des Gewichts können die Längslenker beispielsweise auch aus Stahl oder Leichtmetall gegossen werden.

Zur Verbindung mit der Querstrebe sind die Längslenker zur Verbindung mit dem betreffenden Ende der Querstrebe bevorzugt mit einem Ansatz versehen, dessen Querschnitt vorteilhafterweise rund oder oval ausgeführt sein kann.

Eine besonders vorteilhafte Ausbildung ergibt sich dadurch, dass der Ansatz rohrförmig ausgeführt ist und seine Wandstärke an der Verbindungsstelle mit der Querstrebe etwa gleich der Wandstärke des betreffenden Endes der Querstrebe ist. Diese Art der Ausbildung des Ansatzes eignet sich insbesondere zum Schweißen nach dem Magnet-Arc-Schweißverfahren. Die dazu notwendige, etwa gleiche Wandstärke von Rohrprofilende und Ansatz kann entweder durch mechanische Nachbearbeitung des Ansatzes oder durch Verformung des Rohrprofilendes, d.h.

Querstrebenendes zu einer zum Schweißen geeigneten Wandstärke erreicht werden.

Alternativ dazu kann der Außenumfang bzw. -durchmesser des Ansatzes gleich oder etwas kleiner als der Innenumfang bzw. - durchmesser der durch ein Rohrprofil gebildeten Querstrebe ausgebildet sein. Zur Verbindung mit dem Längslenker kann das Rohrprofilende einfach über den Ansatz gesteckt und so exakt positioniert werden, bevor es an seiner Stirnseite mit dem Ansatz verschweißt wird.

Gemäß einer weiteren alternativen Ausführungsform kann zur Verbindung mit einem jeweiligen Längslenker das betreffende Ende der durch ein Rohrprofil gebildeten Querstrebe in eine Ausnehmung im betreffenden Ansatz gesteckt und an der Stirnseite des Ansatzes mit diesem verschweißt werden.

Die Tragfähigkeit der erfindungsgemäßen angetriebenen Kraftfahrzeug-Hinterachse des Verbundlenkerachstyps kann relativ einfach erhöht werden, indem eine steifere Querstrebe mit einer im Torsionsbereich größeren Querschnittsfläche bzw. - form verwendet wird. Eine derartige Querstrebe kann nach bekannten Verfahren, beispielsweise nach dem Innenhochdruck-Umformverfahren, hergestellt werden. Dabei wird nur der Durchmesser des Rohmaterials im Torsionsbereich vor der Verformung zum U-, V-, L-, X- oder ähnlichen Querschnitt erweitert. Damit kann ohne Veränderung der Verbindungsstellen zu den Längslenkern insbesondere die Stetigkeit und die Torsionsrate des Rohrprofils beeinflusst werden.

Zur gleichmäßigen Verteilung von auftretenden Kräften und Torsionsspannungen im Rohrprofil sind die Übergangsbereiche vom torsionssteifen zum torsionsweichen Querschnitt vorteilhafterweise derart verformt, dass das Torsionswiderstandsmoment vom torsionssteifen zum torsionsweichen Querschnitt kontinuierlich abnimmt. Da das Torsionswiderstandsmoment von der Querschnittsfläche und -geometrie abhängt, kann durch fließende Verformung des Rohrprofils mit definierter Querschnittsveränderung ein derartiger Verlauf des Torsionswiderstandsmomentes in den Übergangsbereichen erreicht werden.

Die Herstellung des erfindungsgemäßen Rohrprofils ist relativ einfach und kostengünstig, da als Ausgangsmaterial ein gewöhnliches Rohr verwendet werden kann. Vor der Verformung können in dieses Rohr spezielle Formstücke für den Torsionsbereich und die Übergangsbereiche eingelegt werden, um den gewünschten Profilquerschnitt zu erreichen. Danach kann mit einem entsprechenden Stempel das Rohr mechanisch auf den vorgegebenen Querschnitt geformt werden. Nach der Entfernung der Formstücke kann das Rohr mit den Längslenkern in einer Schweißvorrichtung verschweißt werden.

Die Längslenker können beispielsweise jeweils um eine zur Längsrichtung des Kraftfahrzeugs zumindest im Wesentlichen senkrechte Achse, insbesondere senkrechte Querachse schwingen. Bei einer alternativen zweckmäßigen Ausführungsform schwingen die Längslenker jeweils um eine bezüglich einer zur Längsrichtung des Kraftfahrzeugs senkrechten Querachse schräg gestellte Achse.

Es wird somit eine kostengünstige angetriebene Kraftfahrzeug-Hinterachse vom Verbundlenkerachsentyp mit einer aus einem einstückigen Rohrprofil bestehenden Querstrebe angegeben, die allgemein nach oben gekröpft ist, um dadurch Platz für den Einbau wenigstens eines dem Antriebsstrangs zugeordneten Moduls, beispielsweise für den Einbau einer Kardanwelle und eines Hinterachs-Differentials, zu schaffen. Während das Torsionsprofil aus einem einzigen Rohr hergestellt ist, können die Längslenker insbesondere als Gusslenker vorgesehen sein. Das Torsionsprofil bzw. die Querstrebe kann am Rand insbesondere einen runden, geschlossenen Querschnitt besitzen. Im mittleren Bereich kann das Rohr beispielsweise zu einer U-Form verformt sein. Aus Packagegründen ist das Torsionsprofil im mittleren Bereich um einen gewissen Betrag nach oben gekröpft. Zur Anlenkung der Längslenker können gerade oder schräge Lagerbuchsen vorgesehen sein. Gegebenenfalls kann das Rollzentrum angehoben werden. Mit unterschiedlichen Rohrstärken und Querschnitten kann die Achse an verschiedene Anforderungen (Fahrzeuggewicht, Basis-/Sport-/OPC-Abstimmung ...) leicht angepasst werden, ohne die kostspieligen Längslenker verändern zu müssen.

Die Erfindung wird im Folgenden anhand eines Ausführungsbeispiels unter Bezugnahme auf die Zeichnung näher erläutert.

Dabei zeigt die einzige Figur der Zeichnung in schematischer perspektivischer Ansicht eine beispielhafte Ausführungsform einer angetriebenen Kraftfahrzeug-Hinterachse 10. Da diese angetrieben ist, ist sie mit dem Kraftfahrzeug-Antriebsstrang koppelbar.

Wie anhand der einzigen Figur zu erkennen ist, ist die angetriebene Kraftfahrzeug-Hinterachse 10 als Verbundlenkerachse mit zwei radtragenden, elastisch am Fahrzeugaufbau angelenkten starren Längslenkern 12 und einer biegesteifen, jedoch torsionsweichen Querstrebe 14 ausgeführt.

Dabei schwingen die Längslenker 12 jeweils um wenigstens eine Schwenkachse 16. Die Querstrebe 14 besteht über ihre gesamte Länge aus einem einstückigen Rohrprofil oder offenen Profil. Sie ist von den Schwenkachsen 16 beabstandet sowie in Längsrichtung des Kraftfahrzeugs betrachtet vor der Radmitte angeordnet.

Im Bereich ihrer beiden Enden ist die Querstrebe 14 mit den Längslenkern 12 verschweißt.

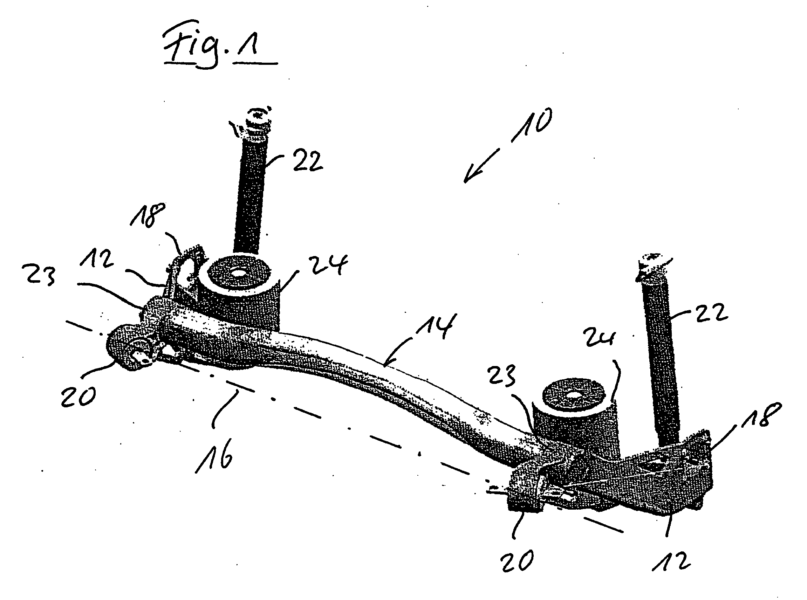

Wie anhand der Figur 1 zu erkennen ist, ist die Querstrebe 14 insbesondere allgemein nach oben gekröpft, um dadurch Platz für den Einbau wenigstens eines dem Antriebsstrang zugeordneten Moduls, beispielsweise für den Einbau einer Kardanwelle und eines Hinterachs-Differentials, zu schaffen. Dabei ist die Querstrebe 14 zumindest in ihrem in Strebenlängsrichtung betrachtet mittleren Bereich um einen vorgegebenen Betrag nach oben gekröpft.

In ihren beiden Enden weist die Querstrebe 14 jeweils einen relativ torsionssteifen Querschnitt und im mittleren Bereich einen relativ torsionsweichen U-, V-, L-, X- oder ähnlichen Querschnitt mit zumindest einem doppelwandigen Profilschenkel auf. Im mittleren Bereich ist diese Querstrebe 14 also wesentlich torsionsweicher als im Bereich ihrer beiden Enden mit jeweils relativ torsionssteiferem Querschnitt.

Der Übergangsbereich vom torsionssteifen zum torsionsweichen Querschnitt kann fließend gestaltet sein.

Am rückwärtigen Ende der Längslenker 12 sind Aufnahmen 18 zur Verbindung mit jeweils einem Radträger zur Lagerung eines Rades vorgesehen. An ihrem vorderen Ende sind die Längslenker 12 jeweils über ein Lagerauge 20 am nicht dargestellten Fahrzeugaufbau elastisch angelenkt. Dabei ist die Schwenkachse 16, um die die Längslenker 12 schwingen, durch diese Lageraugen 20 definiert.

Beim vorliegenden Ausführungsbeispiel besitzt der Querschnitt der Verbindungsstelle zwischen einem jeweiligen Längslenker 12 und der Querstrebe eine rotationssymmetrische Form, die ein axiales Verdrehen der Querstrebe 14 vor dem Schweißen der Verbindung gestattet.

Die Längslenker 12 können insbesondere als biege- und torsionssteife Gussteile ausgeführt sein.

Zur Verbindung mit dem betreffenden Ende der Querstrebe 14 können die Längslenker 12 jeweils mit einem Ansatz 23 versehen sein, der im Querschnitt zweckmäßigerweise rund oder oval ausgeführt ist. Dabei kann der jeweilige Ansatz 23 insbesondere rohrförmig ausgeführt sein und an der Verbindungsstelle mit der Querstrebe 14 eine Wandstärke besitzen, die etwa gleich der Wandstärke des betreffenden Endes der Querstrebe 14 ist. Insbesondere in diesem Fall können die Längslenker 12 bzw. deren Ansätze 23 nach dem Magnet-Arc-Schweißverfahren mit den Enden des Querprofils 14 verbunden sein.

Es ist beispielsweise auch eine solche Ausführung denkbar, bei der zur Verbindung mit einem jeweiligen Längslenker 12 das betreffende Ende der Querstrebe 14 über den betreffenden Ansatz 23 gesteckt und an der Stirnseite der Querstrebe 14 mit dem Ansatz 23 verschweißt ist.

Es ist beispielsweise auch denkbar, zur Verbindung mit einem jeweiligen Längslenker 12 das betreffende Ende der Querstrebe 14 in eine Ausnehmung im betreffenden Ansatz 23 zu stecken und an der Stirnseite des Ansatzes 23 mit diesem zu verschweißen.

Es kann auch die Wandstärke der Querstrebe 14 an deren beiden Enden im Vergleich zur Wandstärke im Torsionsbereich durch Verformung vergrößert sein.

Grundsätzlich ist auch eine solche Ausführung denkbar, bei der die Querstrebe 14 im Torsionsbereich vor der Verformung zu einem U-, V-, L-, X- oder ähnlichem Querschnitt einen geringeren Durchmesser als an ihren beiden Enden besitzt.

Zudem kann die Querstrebe 14 an den Übergangsbereichen vom torsionssteifen zum torsionsweichen Querschnitt derart verformt sein, dass das Torsionswiderstandsmoment vom torsionssteifen zum torsionsweichen Querschnitt progressiv abnimmt.

In der einzigen Figur sind auch Stoßdämpfer 22 sowie Federn 24 erkennbar.

### Bezugszeichenliste

- 10: angetriebene Kraftfahrzeug-Hinterachse
- 12: Längslenker
- 14: Querstrebe
- 16: Schwenkachse
- 18: Aufnahme für Radbefestigung
- 20: Lagerauge
- 22: Stoßdämpfer
- 23: Ansatz
- 24: Aufbau-Feder

## Patentansprüche

1. Angetriebene Kraftfahrzeug-Hinterachse (10), die mit dem Kraftfahrzeug-Antriebsstrang koppelbar ist,
**dadurch gekennzeichnet,**
**dass** sie als Verbundlenkerachse mit zwei radtragenden, elastisch am Fahrzeugaufbau angelenkten starren Längslenkern (12) und einer biegesteifen, jedoch torsionsweichen Querstrebe (14) ausgeführt ist, wobei die Längslenker (12) jeweils um wenigstens eine Schwenkachse (16) schwingen, die Querstrebe (14) über ihre gesamte Länge aus einem einstückigen Rohrprofil oder aus einem offenen Profil besteht und insbesondere von der Schwenkachse (16) beabstandet sowie in Längsrichtung des Kraftfahrzeuges betrachtet vor den Radmitten angeordnet ist, und die Querstrebe (14) im Bereich ihrer beiden Enden mit den Längslenkern (12) verschweißt ist, und dass die Querstrebe (14) insbesondere allgemein nach oben gekröpft ist, um **dadurch** Platz für den Einbau wenigstens eines dem Antriebsstrang zugeordneten Moduls zu schaffen.

2. Angetriebene Kraftfahrzeug-Hinterachse nach Anspruch 1,
**dadurch gekennzeichnet,**
**dass** die Querstrebe (14) so gekröpft ist, um **dadurch** Platz für den Einbau einer Kardanwelle und eines Hinterachs-Differentials zu schaffen.

3. Angetriebene Kraftfahrzeug-Hinterachse nach Anspruch 1 oder 2,
**dadurch gekennzeichnet,**
**dass** die Querstrebe (14) zumindest in ihrem in Strebenlängsrichtung betrachtet mittleren Bereich um einen vorgegebenen Betrag nach oben gekröpft ist.

4. Angetriebene Kraftfahrzeug-Hinterachse nach einem der vorhergehenden Ansprüche,
**dadurch gekennzeichnet,**
**dass** die Querstrebe (14) an ihren beiden Enden jeweils einen relativ torsionssteifen Querschnitt und im mittleren Bereich einen relativ torsionsweichen U-, V-, L-, X- oder ähnlichen Querschnitt mit zumindest einem doppel- oder einwandigen Profilschenkel aufweist.

5. Angetriebene Kraftfahrzeug-Hinterachse nach Anspruch 4,
**dadurch gekennzeichnet,**
**dass** der Übergangsbereich vom torsionssteifen zum torsionsweichen Querschnitt fließend gestaltet ist.

6. Angetriebene Kraftfahrzeug-Hinterachse nach einem der vorhergehenden Ansprüche,
**dadurch gekennzeichnet,**
**dass** der Querschnitt der Verbindungsstelle zwischen einem jeweiligen Längslenker (12) und der Querstrebe (14) eine rotationssymmetrische Form besitzt, die ein axiales Verdrehen der Querstrebe (14) vor dem Schweißen der Verbindung gestattet, und/oder
**dass** die Längslenker (12) als biege- und torsionssteife Gussteile ausgeführt sind, und/oder
**dass** die Längslenker (12) zur Verbindung mit dem betreffenden Ende der Querstrebe (14) jeweils mit einem Ansatz (23) versehen sind.

7. Angetriebene Kraftfahrzeug-Hinterachse nach Anspruch 6,
**dadurch gekennzeichnet,**
**dass** der Ansatz (23) im Querschnitt rund ausgeführt ist.

8. Angetriebene Kraftfahrzeug-Hinterachse nach Anspruch 7,
**dadurch gekennzeichnet,**
**dass** der Ansatz (23) rohrförmig ausgeführt ist und seine Wandstärke an der Verbindungsstelle mit der Querstrebe (14) etwa gleich der Wandstärke des betreffenden Endes der Querstrebe (14) ist.

9. Angetriebene Kraftfahrzeug-Hinterachse nach einem der vorhergehenden Ansprüche,
**dadurch gekennzeichnet,**
**dass** die Längslenker (12) bzw. deren Ansätze (23) mit den Enden des Querprofils (14) verschweißt sind, und/oder
**dass** zur Verbindung mit einem jeweiligen Längslenker (12) das betreffende Ende der Querstrebe (14) über den betreffenden Ansatz (23) gesteckt und an der Stirnseite der Querstrebe (12) mit dem Ansatz (23) verschweißt ist.

10. Angetriebene Kraftfahrzeug-Hinterachse nach einem der Ansprüche 1 bis 8,
**dadurch gekennzeichnet,**
**dass** zur Verbindung mit einem jeweiligen Längslenker (12) das betreffende Ende der Querstrebe (14) in eine Ausnehmung im betreffenden Ansatz (23) gesteckt und an der Stirnseite des Ansatzes (23) mit diesem verschweißt ist.

11. Angetriebene Kraftfahrzeug-Hinterachse nach einem der vorhergehenden Ansprüche,
**dadurch gekennzeichnet,**
**dass** die Wandstärke der Querstrebe (14) an deren beiden Enden im Vergleich zur Wandstärke im Torsionsbereich durch Verformung vergrößert ist, und/oder
**dass** die Querstrebe (14) im Torsionsbereich vor der Verformung zu einem U-, V-, L-, X- oder ähnlichen Querschnitt einen größeren Durchmesser als an ihren beiden Enden besitzt.

12. Angetriebene Kraftfahrzeug-Hinterachse nach einem der Ansprüche 1 bis 11,
**dadurch gekennzeichnet,**
**dass** die Querstrebe (14) im Torsionsbereich vor der Verformung zu einem U-, V-, L-, X- oder ähnlichen Querschnitt einen geringeren Durchmesser als an ihren beiden Enden besitzt.

13. Angetriebene Kraftfahrzeug-Hinterachse nach einem der vorhergehenden Ansprüche,
**dadurch gekennzeichnet,**
**dass** die Querstrebe (14) an den Übergangsbereichen vom torsionssteifen zum torsionsweichen Querschnitt derart verformt ist, dass das Torsionswiderstandsmoment vom torsionssteifen zum torsionsweichen Querschnitt abnimmt.

14. Angetriebene Kraftfahrzeug-Hinterachse nach einem der vorhergehenden Ansprüche,
**dadurch gekennzeichnet,**
**dass** die Längslenker (12) jeweils um eine zur Längsrichtung des Kraftfahrzeuges zumindest im Wesentlichen senkrechte Achse, insbesondere senkrechte Querachse schwingen.

15. Kraftfahrzeug mit einer angetriebenen Kraftfahrzeug-Hinterachse (10) nach einem der vorhergehenden Ansprüche.
